# EUROPEAN PATENT SPECIFICATION

(11) **EP 2 947 060 B1**
(45) Date of publication and mention of the grant of the patent: **05.03.2025**
(21) Application number: 14740937.9
(22) Date of filing: 15.01.2014
(51) Int. Cl.: C04B 35/043, C04B 35/01

(54) **MAGNESIA-CARBON BRICK**
MAGNESIUMOXID-KOHLENSTOFF-STEIN
BRIQUE EN MAGNÉSIE-CARBONE

(30) Priority: 16.01.2013 JP 2013005609; 06.03.2013 JP 2013044450
(43) Date of publication of application: 25.11.2015
(73) Proprietor: Krosakiharima Corporation, Kitakyushu-shi Fukuoka 806-8586 (JP)
(72) Inventor: TANAKA, Masato, Kitakyushu-shi Fukuoka 806-8586 (JP); SHIOHAMA, Michiharu, Kitakyushu-shi Fukuoka 806-8586 (JP); MATSUO, Yoshinori, Kitakyushu-shi Fukuoka 806-8586 (JP); YOSHITOMI, Jouki, Kitakyushu-shi Fukuoka 806-8586 (JP)
(74) Representative: Vossius & Partner Patentanwälte Rechtsanwälte mbB
(86) International application number: PCT/JP2014/050491
(87) International publication number: WO 2014/112493

(56) References cited:
- EP-A1- 0 096 508
- EP-B1- 1 999 085
- JP-A- 2007 076 980
- JP-A- 2007 076 980
- JP-A- 2007 076 980
- JP-A- 2008 151 425
- JP-A- 2010 105 891
- JP-A- 2010 105 891
- JP-A- 2011 184 217
- JP-A- H08 259 340
- JP-A- S58 208 173
- JP-A- S60 264 358
- DATABASE WPI Week 201302, Derwent World Patents Index; AN 2012-R19393, XP002758022
- B.HASHEMI ET AL: "Effects of resin and graphite content on density and oxidation behavior of MgO-C refractory bricks", CERAMICS INTERNATIONAL, vol. 32, 13 June 2005 (2005-06-13), Iran, pages 313 - 319, XP002758023
- HIROSE ET AL: "Influences of Distribution of Al Additive on Properties of MgO-C Refractories", TAIKABUTSU OVERSEAS, TECHNICAL ASSOCIATION OF REFRACTORIES, JP, vol. 32, no. 3, 1 January 2012 (2012-01-01), pages 194 - 200, XP009190201, ISSN: 0285-0028
- FUMINORI HIROSE: "Influence of Distribution of Al Additive on Properties of MgO-C Refractories", REFRACTORIES, vol. 62, no. 7, 1 July 2010 (2010-07-01), pages 339 - 345, XP008180049
- KOICHI SHIMIZU: "Kakushu Hoso Kagobutsu ga MgO-C Renga no Hinshitsu Tokusei ni Oyobosu Eikyo", REFRACTORIES, vol. 65, no. 1, 1 January 2013 (2013-01-01), pages 24 - 25, XP008180048

## Description

### [Technical Field]

The present invention relates to a magnesia carbon brick to be used suitably as a lining material of a furnace to cover the whole of transportation, storage, purification, and the like of a molten metal.

### [Background Art]

A magnesia carbon brick (hereunder, this is called as "MgO-C brick") is a brick comprising magnesia and graphite as main aggregates and having excellent corrosion resistance and spall resistance, whereby it is widely used as a lining material of the whole of furnace including a converter.

As the operation of a smelting vessel is becoming increasingly severer in recent years, an Mg-O brick having more enhanced durability has been required. As a barometer of the durability of the Mg-O brick, the oxidation resistance and the corrosion resistance may be mentioned. In order to enhance these characteristics, making the Mg-O brick denser whereby lowering the air permeability with the outside air and suppressing penetration of slag and molten iron is effective. In the past, in order to make the MgO-C brick structure denser, attempts including improvement of the blending recipe thereof and introduction of a large volume vacuum molding machine have been made whereby achieving significantly low porosity thereof; and at the same time, it was confirmed that the durability thereof could be improved thereby significantly contributing to reduction of the unit consumptions of the refractories.

On the other hand, the evaluation technology of the MgO-C brick has been improved. In the past, mainly the characteristics have been evaluated after the MgO-C brick is dried, whereas recently the characteristics are evaluated after it is reductively fired. According to this, even if the apparent porosity is 3% or less after drying,, it can occasionally reach 10%, or even higher after the reductive firing at 1400°C for 3 hours, whereby the approximating value can be obtained to that of the brick after used. That is, the state approximating more actual use state of the sample can be obtained if the sample is reductively fired in advance as compared with otherwise, so that this can be judged effective as the improvement index of the material.

In addition, with a purpose to improve denseness of the MgO-C brick and with other purposes, addition of metals such as Al and Si becomes very common, and in it, the addition amount, form, and particle size thereof have been extensively investigated. For example, in Patent Document 1, it is shown that the MgO-C brick added with 1 to 8% by weight of the metal Al powder of the atomized type having the particle diameter of 1mm or less is effective to improve the durability thereof. Here, it is presumed that the reason for using the atomized powder is because the specific surface area thereof is so small that the reaction can be readily suppressed and continued, and therefore the structure organization caused by the received heat can be slowed. With regard to the addition amount thereof, a comparatively large amount is considered to be preferable in order that the metal Al may still remain so as to be enough to inhibit oxidation even if it is consumed for formation of aluminum carbide. However, because the MgO-C brick expands by the spinel which is finally formed as the temperature rises, there is a fear that, for example, the denseness thereof may be damaged by increase of the residual expansion.

On the other hand, in Patent Document 2, it is shown that by concurrently adding very minute amount of the metal Si to the metal Al, improved effects can be obtained in the oxidation resistance and the thermal strength. However, in this Document, there is no clear indication with regard to the effects of the denseness of the brick, i.e., the effects of the apparent porosity. Moreover, it is considered preferable that the addition amount of the metal Al be comparatively large; and therefore, there is a concern in deterioration of the denseness as mentioned above.

In Patent Document 3, the MgO-C bricks having high thermal strength and excellent corrosion resistance obtained by concurrently adding the metal Al and the metal Si are disclosed. Among them included also is the MgO-C brick having comparatively low addition amounts of the metal Al and the metal Si, similarly to the present invention which will be discussed later. However, comparatively coarse particles having the particle diameter of 150 µm or less were used therein, so that all the porosities after the reductive firing at 1200°C could not become lower than 9%; and thus, the denseness thereof was insufficient.

It is known that the grain size distribution of the magnesia raw material can also have an influence on the denseness of the MgO-C brick. For example, Patent Document 4 proposes the dense MgO-C brick whose oxidation resistance, corrosion resistance, and thermal strength can be improved by containing 30 to 45% by weight of the intermediate particles having the size of 1 to 0.2 mm and 15 to 25% by weight of the fine particles having the size of 0.2 mm or less. The intention to achieve the denseness by increasing the amount of the intermediate particles is as same as that of the present invention; however, in so doing, unless amount of the fine particles is limited to a somewhat low level, the filling property is deteriorated, so that the denseness cannot be enhanced, and moreover, it is accompanied with deterioration of the spall resistance.

JP 5 097861 B1 discloses a durable magnesia carbon-based brick. The magnesia carbon-based brick includes magnesia, carbon, and an organic binder.

EP 1 999 085 B1 discloses a fireproof carbon-bonded magnesia brick.

B.Hashemi et al., "Effects of resin and graphite content on density and oxidation behavior of MgO-C refractory bricks", CERAMICS INTERNATIONAL, Iran, (20050613), vol. 32, pages 313 - 319, discusses effects of resin and graphite content on density and oxidation behavior of MgO-C refractory bricks.

EP 0 096 508 A1 discloses magnesia-carbon refractory. The unburnt refractory corn comprises fine magnesia as a main constituent. A maximum grain diameter of the fine magnesia is 1.5 mm.

JP 2007 076980 A discloses a magnesia carbon brick having good thermal shock resistance and corrosion resistance by uniformly impregnating with tar or pitch.

JP 2010 105891 A discloses a refractory composition which provides a refractory having an increased fixed carbon content and having satisfactory oxidation resistance, spalling resistance and corrosion resistance.

### [Citation List]

### [Patent Document]

Patent Document 1: Japanese Patent Laid-Open Publication No. 2001-72474
Patent Document 2: Japanese Patent Laid-Open Publication No. S56-59669
Patent Document 3: Japanese Patent Laid-Open Publication No. S56-59668
Patent Document 4: Japanese Patent Laid-Open Publication No. H01-270564

### [Summary of the Invention]

### [Problems to be Solved by the Invention]

The problem to be solved by the present invention is to further enhance the denseness of the MgO-C brick (to lower the porosity thereof) thereby providing the MgO-C brick having high durability never found in the past.

### [Means for Solving the Problems]

In order to solve the problem mentioned above, the present invention could accomplish further lowering of the porosity of the MgO-C brick by optimizing the kind, addition amount, and particle diameter of the metals to be added; and as a result, it became possible to provide the MgO-C brick having high durability never found in the past.

In the past, there also have been several examples in which the apparent porosity was measured by reductively firing the MgO-C brick; however, in most of them, the firing temperature had been 1200°C or lower, and therefore, there has been no example in which the low porosity of 7.8% or less could be achieved at the high thermal load of 1400°C. Inventors of the present invention found that by further lowering the apparent porosity of the MgO-C brick after treatment at the high thermal load to 7.8% or less, the corrosion resistance and the oxidation resistance could be enhanced to the level never found in the past. This could be achieved by the ways and effects as shown below.

Addition of the metal Al to the MgO-C brick is in the public domain; and in it, it was intended to obtain the enhanced effects in the oxidation resistance and the thermal strength by such a way that the addition amount thereof might become as much as possible provided that increase of the modulus of elasticity and deterioration of the spall resistance would be acceptable. However, during the present study, inventors found that when a large amount of the metal Al was added, alumina and spinel produced during the heating process caused the volume expansion to form pores in the fine structure, and moreover, there was a case that the denseness of the structure was deteriorated by increase of the linear change. If the amount of the metal Al is kept at a comparatively low level, there is a possibility that the oxidation resistance might be deteriorated; however, by securing the denseness of the MgO-C brick the air permeability can be lowered so that the oxidation resistance can be kept. In addition, in order to lower the apparent porosity, it is preferable that the particle diameter thereof be smaller. This is because the smaller metal Al can make the diameters of the pores smaller which are formed by melting and evaporation during the heating-up process so that the probability to make open -pores can be made less. In addition, this is thought to be effective also in making the structure of the MgO-C brick completing sooner.

On the other hand, it was found that addition of the metal Si is also effective to lower the apparent porosity. The metal Si forms SiC and then SiO₂ in the MgO-C brick during the heating-up process thereof. This SiO₂ reacts with MgO to form enstatite and forsterite, these having comparatively low melting points, so that the liquid phase formed during this reaction process can fill the fine pores of the MgO-C brick thereby lowering the porosity thereof. Moreover, under co-existence with the metal Al, cordierite, which has a further lower melting point, is formed, so that the more efficient effect for the liquid phase to fill the pores can be expressed. Here, in order to lower the porosity it is also effective that the particle diameter of the metal Si is smaller; and this is because, similarly to the case of the metal Al, the diameters of the pores which are formed by melting and evaporation during the heating-up process can be made smaller so that the probability to make open-pores can be made less.

Boron carbide is used to suppress the deterioration of the brick structure during a long period of a thermal history. The mechanism thereof is presumed to be as follows.

The temperatures to form reaction products of the metal Al are about 800°C for Al₄C₃ and about 900°C for Al₂O₃. On the other hand, the oxidation on-set temperature of the boron carbide is about 500°C; and under co-existence of the boron carbide and the metal Al, Al₄BC starts to be produced at 400 to 500°C. B₂O₃, which is produced by oxidation of the boron carbide, reacts with Al₂O₃ to form the liquid phase which is a mixture of 9Al₂O₃·2B₂O₃, 2Al₂O₃·B₂O₃, Al₂O₃, and B₂O₃. From these, by containing the boron carbide in the MgO-C brick added with the metal Al, formation of Al₂O₃, which causes formation of the spinel with the magnesia, can be suppressed from a lower temperature. Moreover, because compounds of the Al₂O₃-B₂O₃ types having low melting temperatures are formed, content of Al₂O₃ in the brick can be reduced. With this, the spinel reaction between Al₂O₃ and the magnesia can be suppressed; and as a result, it is presumed that expansion of the brick can be suppressed. Moreover, because the liquid phase which is a mixture of 9Al₂O₃·2B₂O₃, 2Al₂O₃·B₂O₃, Al₂O₃, and B₂O₃ acts as an anti-oxidant film at high temperature, deterioration of the oxidation resistance of the MgO-C brick by decreasing the amount of the metal Al may be suppressed, or the oxidation resistance thereof may be enhanced.

As the binding material of the MgO-C brick, a phenolic resin is generally used; and in this case, it is preferable that the residual carbon rate thereof be rather high. This is because evaporation of a solvent during the heating process and volatile matters formed by the polycondensation reaction can be reduced, and also because a so-called loophole, through which volatile matters can escape outside the system, facilitates making the open- pore.

To compensate the spall resistance of the MgO-C brick, addition of a pitch-based raw material becomes widely applied. Pitch-based raw materials having various softening temperatures and residual carbon rate are commercially available; however, all of these pitch-based raw materials are tend to increase the porosity because these contain volatile matters. In addition, if the addition amount thereof is increased, the filling property of the brick becomes deteriorated and the spring back after shaping increases; and thus, the denseness thereof is tend to be deteriorated. Accordingly, content of the pitch-based raw material is preferably 1% or less by mass in outer percentage relative to total amount of the magnesia raw material and the graphite, although it is not necessarily limited to this value.

The grain size distribution of the magnesia raw material can have an influence to the denseness of the MgO-C brick. The magnesia raw material expands and shrinks during heating and cooling processes, respectively; and because the expansion rate thereof is larger than that of the graphite, spaces are formed around its during shrinkage. Comparatively large spaces are formed around the coarse particle having the particle size of more than 1 mm, so that the open pore is readily formed, thereby leading to significant increase in the apparent porosity. For this reason, by increasing the blending amount of the particles having the particle diameter of 1mm or less, the apparent porosity can be made lower. In addition, , if the blending amount of fine particles having the size of less than 75 µm are controlled in a somewhat low level so as to maintain the distance between the magnesia particles thereby avoiding the collision of them, and thus the filling properties secured and denseness can be enhanced. In addition, to control the blending amount of the fine particles having the size of less than 75 µm can lead to secure the spall resistance as well.

In addition, the present invention is characterized by that in the MgO-C brick containing the magnesia raw material and the graphite contained therein, by controlling the particle diameter and content of the metal Al, and also by controlling the particle diameter and content of the boron carbide to maintain the brick structure and minimize the deterioration of the structure by exposure to the thermal history during a long period of time, so that the denseness can be maintained.

Hereunder, constitution of the present invention will be explained in detail.

As to the firing temperature at the time of evaluation of the apparent porosity of the MgO-C brick, 1400°C is decided. The temperature lower than this temperature is not suitable for evaluation of the denseness, because not only the reaction inside the MgO-C brick cannot be completed, but also the thermal load is insufficient. On the other hand, at the temperature higher than this temperature, the sintering takes place, so that not only the evaluation separately from this effect becomes difficult, but also the load to the firing furnace becomes too large; and thus, this temperature is inappropriate for the regular measurement evaluation. As to the firing period at 1400°C of the exposure temperature of the sample, the period of 3 hours is decided. The period of less than 3 hours is inappropriate because the reaction inside the MgO-C brick cannot be completed. On the other hand, if the firing is made for a longer period than this period, the sintering thereof takes place, so that the evaluation separately from this effect becomes difficult. The present invention is characterized by that the apparent porosity is suppressed at 7.8% or less, which is measured by the Archimedes method (JIS R 2205) using kerosene as the medium for it by using the sample obtained after firing at 1400°C for 3 hours under the reducing atmosphere.

The addition amounts of the metals were stipulated by the ratios thereof to the amount of the graphite. This is because the necessary amount of the metal as the antioxidant is determined more appropriately in accordance with the amount of the graphite which is disappeared by oxidation.

The addition amount of the metal Al is appropriately 15% or less by mass, or more preferably 10% or less by mass, relative to the addition amount of the graphite. By keeping the amount of the metal Al at a comparatively low level as mentioned above, the expansion can be suppressed and the pores formed by evaporation of the metal Al can be controlled; and as a result, the MgO-C brick can be made dense. The reason why the addition amount thereof is 1% or more by mass is that the addition amount less than this value is insufficient in the oxidation resistance; and more preferable addition rate is 3% or more by mass. A further enhanced effect thereof can be expressed when the fine metal Al having the particle diameter of 75 µm or less is used. Specifically, it is preferable to use the metal Al having the particle composition with the content of the particles having the particle diameter of 75 µm or less being 85% or more by mass, or it is more preferable to use the metal Al with the content of the particles having the particle diameter of 45 µm or less being 85% or more by mass.

The addition amount of the boron carbide is appropriate in the range of 1% or more by mass and 50% or less by mass, or more preferably 25% or less by mass, relative to addition amount of the metal Al. If the addition amount of the boron carbide is more than 50% by mass, B₂O₃ is produced excessively by oxidation when it is exposed to the thermal history, whereby the excessive B₂O₃ not reacted with Al₂O₃ reacts with the magnesia raw material to produce a large amount of low-melting products; and as a result, it causes deterioration of the corrosion resistance. If the addition amount of the boron carbide is less than 1% by mass, the effect thereof cannot be obtained enough. In addition, the effect of the boron carbide can be clearly obtained when the boron carbide containing 85% or more by mass of the particles having the particle diameter of 45 µm or less is used. Meanwhile, a commercially available boron carbide which is generally used for refractories may be used.

The addition amount of the metal Si is sufficient even if it is minute with the amount thereof being 5% or less by mass relative to the addition amount of the graphite. A further enhanced effect thereof can be obtained, when fine metal Si having the particle diameter of 75 µm or less is used, specifically as the particle composition, when the metal Si containing 85% or more by mass of the particles having the particle diameter of 75 µm or less is used. Excessive addition amount more than this value increases the amount of low-melting products in the MgO-C brick, leading to deterioration of the corrosion resistance whereby leading to deterioration of its durability. The lower limit of the addition amount of the metal Si is not particularly restricted; however, in order to eminently express the effect of the metal Si, the addition amount thereof is preferably 1% or more by mass relative to the addition amount of the graphite.

As to the phenolic resin to be used as the binder, any of a novolak type, a resol type, and a mixture of them may be used; however, a novolak type is more preferable because it does not readily cause the temporal change in the MgO-C brick. It can be used in any state, i.e., a powder state, a solution state where the resin is dissolved in an appropriate solvent, and a mixed state of the solution and powder states, wherein a curing agent such as hexamethylene tetramine is usually added with an appropriate amount to secure the residual carbon rate. It is preferable that the residual carbon rate thereof is 34% or more, or more preferably 48% or more, although the residual carbon rate is not necessarily limited to these values.

The pitch-based raw material irrespective of the softening temperature and residual carbon rate may be useful; and if necessary, they may be added as combination of them for use. In addition, if it is added after the dispersibility thereof is enhanced as disclosed in International Patent Laid-Open Publication No. 2007/011038, not only deterioration of other characteristics can be suppressed, but also a further enhanced effect of the spall resistance can be obtained. However, for the reasons as mentioned before, the addition amount thereof is preferably less than 1.0% by mass, or more preferably less than 0.6% by mass, in outer percentage relative to total amount of the magnesia raw material and the graphite.

As to the grain size distribution of the magnesia raw material, the blending is made in such a way that the amount of the particles having the particle diameter of in the range of 0.075 mm or more and 1 mm or less may be included 35% or more by mass relative to total amount of the magnesia raw material and the graphite, and the mass ratio of the magnesia raw material having the particle diameter of in the range of 0.075 mm or more and 1 mm or less to the magnesia raw material having the particle diameter of less than 0.075 mm (mass of the magnesia raw material having the particle diameter of in the range of 0.075 mm or more and 1 mm or less/mass of the magnesia raw material having the particle diameter of less than 0.075 mm) may become 4.2 or more. By so doing, the content of the magnesia raw material having the size of more than 1 mm, which produces a comparatively large open pore, can be suppressed at the level of lower than 57% by mass. The reason why the particles having the particle diameter of in the region of 0.075 mm or more and 1mm or less are blended with the amount of thereof being 35% or more by mass is that the effect to suppress the porosity by the above-mentioned mechanism is insufficient when the blending amount thereof is less than this value. In addition, when the mass ratio of the magnesia raw material having the particle diameter of in the range of 0.075 mm or more and 1mm or less to the magnesia raw material having the particle diameter of less than 0.075 mm is made 4.2 or more, blending of excessive amount of the particles having the particle diameter of less than 0.075 mm can be prevented; and in addition, not only the distance between magnesia particles in the matrix can be kept appropriately whereby securing the filling property and thus leading to enhancement of the denseness, but also the spall resistance can be secured.

Moreover, as to the particle composition of the magnesia raw material, the blending is made preferably in such a way that the amount of the magnesia raw material having the particle diameter of in the range of 0.075 mm or more and 1 mm or less may become 35% or more by mass, and the amount of the magnesia raw material having the particle diameter of less than 0.075 mm may become 15% or less by mass, the both amounts being relative to total amount of the magnesia raw material and the graphite, and that the mass ratio of the magnesia raw material having the particle diameter of in the range of 0.075 mm or more and 1 mm or less to the magnesia raw material having the particle diameter of less than 0.075 mm may become 4.2 or more.

That is, when fine particles having the particle diameter of less than 0.075 mm are contained too much, the chance of contact among the magnesia raw materials by themselves increases thereby lowering the shapability; and thus, it is preferable that the amount thereof be made smaller in order to improve the filling property after shaping. Specifically, the blending amount of the fine particles having the particle diameter of less than 0.075 mm is preferably 15% or less by mass. If the blending amount of these fine particles becomes more than 15% by mass, it is not desirable, because not only the filling property thereof is deteriorated, but also the structure tends to be deteriorated after exposure to the thermal history thereby tending to make the porosity higher.

In addition, the magnesia raw material expands and shrinks during the heating and the cooling process, respectively; and because this material has a larger expansion rate than the surrounding graphite, spaces are formed around the magnesia particles during shrinkage. Because especially comparatively large spaces are formed around the coarse particle having the particle diameter of more than 1 mm, the spaces readily becomes an open pore, thereby leading to significant increase in the apparent porosity. Accordingly, it is preferable to increase the blending amount of the medium-sized particles having the particle diameter of in the range of 0.075 mm or more and 1 mm or less and to decrease the blending amount of the coarse particles having the particle diameter of more than 1 mm. Specifically, the blending amount of the medium-sized particles having the particle diameter of in the range of 0.075 mm or more and 1 mm or less is preferably 35% or more by mass, or more preferably 43% or more by mass. In addition, the mass ratio of the medium-sized particles having the particle diameter of in the range of 0.075 mm or more and 1 mm or less to the fine particles having the particle diameter of less than 0.075 mm (mass of the medium-sized particles/mass of the fine particles) is preferably 4.2 or more.

The magnesia raw material to be used in the MgO-C brick produced by the present invention may be any of fused magnesia and sintered magnesia, or a mixture of them for use. The composition thereof is not particularly stipulated; however, in order to obtain a further higher corrosion resistance, it is preferable to use the magnesia aggregates having a high purity MgO; and thus, the MgO purity is preferably 96% or more, or more preferably 98% or more.

As to the graphite, usual flake graphite is used; however, in place of this, or together with this, expanded graphite, artificial graphite, Kish graphite, and the like may be used. The composition thereof is not particularly stipulated; however, in order to obtain a further higher corrosion resistance, it is preferable to use the graphite having a high C purity, so that the C purity thereof is preferably 85% or higher, or more preferably 98% or higher. As to the particle diameter, if it is extremely fine, preservation of the denseness is difficult, so that it is preferable to use the graphite having the particle diameter of 0.04 mm or more, or more preferably 0.15 mm or more, with the amount thereof being 40% or more by mass based on the blending amount thereof.

Moreover, in order to improve various properties, other metals such as Mg, Ca, Cr, and Zr, or a metal alloy of two or more of these elements, or a compound of them with B and C may be added. In the present invention, although the addition effect of them is not damaged, if these are added with an excessive amount, there is an adverse effect such as deterioration of the denseness; and thus, similarly to the case of metal Al, the addition amount thereof is preferably 15% or less by mass relative to the addition amount of the graphite.

Besides them, in order to mainly compensate the spall resistance, carbon black in the type of monocyte and/or aggregate, or the powders thereof treated with dispersion, pulverization, or the like, may be used. However, this can also deteriorate the denseness if it is added with an excessive amount; and thus, the addition amount thereof is preferably 1.5% or less by mass relative to total amount of the C components.

In manufacturing of the MgO-C brick of the present invention, kinds of a kneader, a shaping machine, and a dryer are not restricted, nor is the content of manufacturing thereof. However, in order to obtain the dense MgO-C brick, it is preferable to knead the added raw materials by using a kneader capable of dispersing and kneading them sufficiently well. The pressing pressure is preferably about 120 MPa or more, or more preferably 150 MPa or more. The drying temperature needs to be higher than a boiling point of a solvent for the binding material; however, the temperature is preferably 400°C or lower in order to avoid oxidation.

### [Advantageous Effects of Invention]

The dense MgO-C brick thus obtained, namely the MgO-C brick having a low porosity, is excellent in the corrosion resistance. In addition, because the air permeability can be significantly lowered, the oxidation resistance thereof is not deteriorated in spite of the low addition amounts of the metals. The grain size distribution of the magnesia raw material is designed in consideration of the spall resistance by suppressing the blending amount of fine particles; and thus, it deserves special mention that there is no need to worry about cracking during operation.

In addition, in the dense MgO-C brick especially added with boron carbide, loose of the brick structure due to the expansion of the metal Al added thereto as the antioxidant can be suppressed; and therefore, even if it is used under exposure to the thermal history for a long time during its use in the operation, deterioration of the brick structure can be made small and the denseness thereof can be maintained, so that durability of the brick can be improved thereby contributing to extension of the furnace life. Owing to this, the maintenance frequency of the furnace can be decreased, which contributes to reduction in the unit consumptions of the refractories and to enhancement of the productivity because the time span for maintenance of the furnace can be made longer.

The MgO-C brick of the present invention as mentioned above can be used suitably in every parts of the converter, a slag line part of the ladle, and a secondary refining vessel, wherein it can contribute to expansion of the furnace life and reduction of the unit consumptions of the refractories.

### [Description of the Embodiments]

Hereunder, modes for carrying out the present invention will be explained on the basis of Examples. Meanwhile, the present invention is not limited to these Examples.

### [Examples]

### Examples A

The sample was prepared by using the production line for a converter manufacturing. The raw materials were weighed in accordance with the ratios shown in Tables 1 to 3. Kneading was performed by using a high speed type mixer, and shaping in the standard form for a wall with the length of 810 mm was done by the vacuum friction press with the maximum pressure of 180 MPa. Drying was done by keeping it in a batch furnace at the maximum temperature of 280°C for 5 hours.

**[Table 1]**

| | | | Comparative Example 1 | Comparative Example 2 | Example 1 | Example 2 | Example 3 | Example 4 |
|---|---|---|---|---|---|---|---|---|
| Fused magnesia | | More than 1 mm | 36 | 36 | 36 | 36 | 36 | 36 |
| | | 1 to 0.075 mm | 39 | 39 | 39 | 39 | 43 | 43 |
| | | Less than 0.075 mm | 12 | 12 | 12 | 12 | 8 | 8 |
| Magnesia amount; | | | 3.25 | 3.25 | 3.25 | 3.25 | 5.38 | 5.38 |
| (0.075 mm or more to 1mm or less)/(less than 0.075 mm) | | | | | | | | |
| Flake graphite | | | 13 | 13 | 13 | 13 | 13 | 13 |
| Metal Al | | 0.15 mm or less | | | | | | |
| | | 0.075 mm or less | 0.12 | 2.0 | 0.13 | 1.9 | 0.13 | 1.9 |
| | | 0.045 mm or less | | | | | | |
| Ratio of metal Al to addition amount of graphite (%) | | | 0.9 | 15.4 | 1.0 | 14.6 | 1.0 | 14.6 |
| Metal Si | | 0.075 mm or less | | | - | - | - | - |
| | | 0.045 mm or less | | | | | | |
| Ratio of metal Si to addition amount of graphite (%) | | | | | | | | |
| B4C | | | | | - | - | - | - |
| Pitch | | Softening temperature: 120°C | | | | | | |
| | | Softening temperature: 280°C | 0.5 | 0.5 | 0.5 | 0.5 | 0.5 | 0.5 |
| Phenol resin | | Residual carbon rate: 42% | ○ | ○ | ○ | ○ | ○ | ○ |
| | | Residual carbon rate: 48% | | | | | | |
| | | Residual carbon rate: 52% | | | | | | |
| Apparent porosity (%) | After firing at 1400°C for 3 hours | | 10.2 | 11.0 | 7.8 | 7.5 | 7.5 | 7.4 |
| oxidation resistance | Thickness of decarburized layer (mm) | | 13.5 | 12.9 | 11.9 | 10.3 | 12.1 | 10.3 |
| Corrosion resistance | Index | | 100 | 99 | 141 | 138 | 147 | 143 |

**[Table 2]**

| Example No. | | | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|
| Fused magnesia | | More than 1 mm | 36 | 36 | 36 | 36 | 36 | 42 | 38 | 34 | 32 | 36 | 36 | 38 | 36 | 36 | 36 | 40 | 39 |
| | | 1 to 0.075 mm | 43 | 43 | 43 | 43 | 43 | 47 | 46 | 41 | 36 | 43 | 43 | 46 | 43 | 43 | 43 | 38 | 44 |
| | | Less than 0.075 mm | 8 | 8 | 8 | 8 | 8 | 8 | 8 | 7 | 7 | 8 | 8 | 8 | 8 | 8 | 8 | 9 | 4 |
| Magnesia amount; | | | | 5.38 | 5.38 | 5.38 | 5.38 | 5.88 | 5.75 | 5.86 | 5.14 | 5.38 | 5.38 | 5.75 | 5.38 | 5.38 | 5.38 | 4.22 | 11.00 |
| (0.075 mm or more to 1mm or less)/(less than 0.075 mm) | | | | | | | | | | | | | | | | | | | |
| Flake graphite | | | | 13 | 13 | 13 | 13 | 3 | 8 | 18 | 25 | 13 | 13 | 8 | 13 | 13 | 13 | 13 | 13 |
| Metal Al | | 0.15 mm or less | | | | | | | | | | | | | | | | | |
| | | 0.075 mm or less | 1 | 1 | 1 | | | 0.05 | 0.6 | 1.4 | 2.0 | | | | | | | | |
| | | 0.045 mm or less | | | | 1 | 1 | | | | | 1 | 1 | 0.5 | 1 | 1 | 1 | 1 | 1 |
| Ratio of metal Al to addition amount of graphite (%) | | | | 7.7 | 7.7 | 7.7 | 7.7 | 1.7 | 7.5 | 7.8 | 8.0 | 7.7 | 7.7 | 6.3 | 7.7 | 7.7 | 7.7 | 7.7 | 7.7 |
| Metal Si | | 0.075 mm or less | - | 0.2 | | | | | | | | | | | | | | | |
| | | 0.045 mm or less | | | 0.2 | 0.4 | 0.6 | | | 0.2 | 0.2 | 0.2 | 0.2 | | 0.2 | 0.2 | 0.2 | 0.2 | 0.2 |
| Ratio of metal Si to addition amount of graphite (%) | | | | 1.5 | 1.5 | 3.1 | 4.6 | | | 1.1 | 0.8 | 1.5 | 1.5 | | 1.5 | 1.5 | 1.5 | 1.5 | 1.5 |
| B4C | | | | - | - | - | 0.1 | | 0.1 | 0.2 | 0.2 | 0.1 | 0.1 | 0.1 | 0.1 | 0.1 | 0.1 | 0.1 | 0.1 |
| Pitch | | Softening temperature: 120°C | | | | | | | | | | | | | | | | | |
| | | Softening temperature: 280°C | 0.5 | 0.5 | 0.5 | 0.5 | 0.5 | 0.5 | 0.5 | 0.5 | 0.5 | 0.5 | 0.5 | 0.5 | 0.9 | 0.2 | 0 | 0.5 | 0.5 |
| Phenol resin | | Residual carbon rate: 42% | ○ | ○ | ○ | ○ | ○ | ○ | ○ | ○ | ○ | | | | | | | ○ | ○ |
| | | Residual carbon rate: 48% | | | | | | | | | | ○ | | | | | | | |
| | | Residual carbon rate: 52% | | | | | | | | | | | ○ | ○ | ○ | ○ | ○ | | |
| Apparent porosity (%) | After firing at 1400°C for 3 hours | | | 6.9 | 6.7 | 6.2 | 5.6 | 7.2 | 6.3 | 6.7 | 7.1 | 6.0 | 5.5 | 5.6 | 5.9 | 5.4 | 5.2 | 7.0 | 6.1 |
| Oxidation resistance | Thickness of decarburized layer (mm) | | | 10.5 | 10.2 | 9.9 | 9.5 | 12.5 | 9.9 | 10.2 | 10.3 | 9.5 | 9.1 | 9.2 | 9.1 | 9.0 | 8.9 | 10.5 | 9.4 |
| Corrosion resistance | Index | | 121 | 121 | 128 | 137 | 139 | 122 | 137 | 128 | 119 | 141 | 156 | 154 | 145 | 157 | 160 | 122 | 141 |

**[Table 3]**

| Comparative Example No. | | | 3 | 4 | 5 | 6 | 7 | 8 | 9 |
|---|---|---|---|---|---|---|---|---|---|
| Fused magnesia | | More than 1 mm | 36 | 36 | 36 | 42 | 31 | 38 | 50 |
| | | 1 to 0.075 mm | 43 | 43 | 43 | 48 | 36 | 39 | 30 |
| | | Less than 0.075 mm | 8 | 8 | 8 | 8 | 7 | 10 | 7 |
| Magnesia amount; | | | | 5.38 | 5.38 | 6.00 | 5.14 | 3.90 | 4.29 |
| (0.075 mm or more to 1mm or less)/(less than 0.075 mm) | | | | | | | | | |
| Flake graphite | | | | 13 | 13 | 2 | 26 | 13 | 13 |
| Metal Al | | 0.15 mm or less | | | 1.0 | | | | |
| | | 0.075 mm or less | 0.12 | 2.0 | | 0.05 | 2.0 | 1.5 | 1.5 |
| | | 0.045 mm or less | | | | | | | |
| Ratio of metal Al to addition amount of graphite (%) | | | | 15.4 | 7.7 | 2.5 | 7.7 | 11.5 | 11.5 |
| Metal Si | | 0.075 mm or less | | | | | | | |
| | | 0.045 mm or less | | | | | 0.2 | 0.2 | 0.2 |
| Ratio of metal Si to addition amount of graphite (%) | | | | | | | 0.8 | 1.5 | 1.5 |
| B4C | | | | | | | 0.2 | 0.1 | 0.1 |
| Pitch | | Softening temperature: 120°C | | | | | | | |
| | | Softening temperature: 280°C | 0.5 | 0.5 | 0.5 | 0.5 | 0.5 | 0.5 | 0.5 |
| Phenol resin | | Residual carbon rate: 42% | ○ | ○ | ○ | ○ | ○ | ○ | ○ |
| | | Residual carbon rate: 48% | | | | | | | |
| | | Residual carbon rate: 52% | | | | | | | |
| Apparent porosity (%) | After firing at 1400°C for 3 hours | | | 8.4 | 8.2 | 8.4 | 8.3 | 8.0 | 8.1 |
| Oxidation resistance | Thickness of decarburized layer (mm) | | | 10.2 | 11.8 | 12.9 | 10.6 | 10.4 | 11.0 |
| Corrosion resistance | Index | | 100 | 99 | 98 | 96 | 98 | 96 | 93 |

From these, the sample for measurement of the physical properties was cut out; and then, the apparent porosity thereof was measured, and also the oxidation resistance and the corrosion resistance thereof were evaluated.

For measurement of the apparent porosity, the sample in the size of 60×60×60 mm was used. The apparent porosity was measured after the sample was heat-treated at 1400°C in the reducing atmosphere for 3 hours. The heat-treatment at the temperature below 1400°C is not suitable for evaluation of the denseness, because not only the reaction inside the MgO-C brick cannot be completed, but also the thermal load is insufficient. On the other hand, at the temperature higher than 1400°C, sintering thereof takes place; and thus, not only evaluation of the denseness separately from the effect of sintering becomes difficult, but also the load to the furnace in which the heat-treatment is carried out is too large; and thus, this is inappropriate as the regular evaluation method. The period of less than 3 hours for the heat-treatment is inappropriate because the reaction inside the MgO-C brick cannot be completed during this period. On the other hand, if the heat-treatment is made for a longer period than this period, sintering thereof takes place, so that the evaluation separately from this effect becomes difficult. In the present Examples, the apparent porosity of the sample obtained after the heat-treatment at 1400°C for 3 hours in the reducing atmosphere was measured in accordance with the Archimedes method (JIS R 2205) using kerosene as the medium for the measurement.

For evaluation of the oxidation resistance, the sample after drying was cut out into the size of φ50×50 mm, and then, it was fired at 1400°C under an air atmospheric in an electric furnace for 5 hours. Thereafter, the sample was cut in the direction of the height in its central part; and the thickness of the decarburized portion in which the color thereof was changed was measured in four directions; and the average value of these values was taken as the thickness of the decarburized layer.

The corrosion resistance was evaluated by the rotary corrosion test. At the rotary corrosion test, inside the drum having a horizontal rotation axis, the lining was made with the testing brick; and then, after heating, the slag is charged into it, the surface of the brick was corroded. The heating source of the oxygen-propane burner was used with the testing temperature of 1700°C, wherein the slag composition of CaO/SiO₂=3.4, FeO=20% by mass, and MgO=3% by mass was used; and discharge and charge of the slag were repeated for 10 times in every 30 minutes. After completion of the test, the maximum size of the corroded portion was measured to calculate the corrosion amount; and the corrosion resistance index is shown by taking the corrosion amount of Comparative Example 1 shown in Table 1 as 100. In this corrosion resistance index, when the value is larger, it means higher corrosion resistance.

The effect of the addition amount of the metal Al relative to the addition amount of graphite (this is shown by the ratio to total amount of the magnesia raw material and the graphite - the same is applied hereunder) was studied, and the results are shown in Table 1. The corrosion resistance index is shown by taking the corrosion amount of Comparative Example 1 in Table 1 as 100.

In Example 1, 0.13% by mass of the metal Al having the particle diameter of 75 µm or less relative to 13% by mass of the graphite was added thereby bringing the ratio of the metal Al to the addition amount of the graphite to 1.0%; and as a result, the apparent porosity of 7.8% could be achieved, so that excellent results could be obtained in both the oxidation resistance and the corrosion resistance. On the other hand, in Comparative Example 1, because the addition amount of the metal Al was small, that is, because the ratio of the metal Al to the addition amount of the graphite was low, the apparent porosity became higher, thereby leading to poor results in both the oxidation resistance and the corrosion resistance.

In Example 2, 1.9% by mass of the metal Al having the particle diameter of 75 µm or less relative to 13% by mass of the graphite was added whereby bringing the ratio of the metal Al to the addition amount of the graphite to 14.6%; and as a result, the apparent porosity could be lowered and the oxidation resistance could be enhanced. On the other hand, in Comparative Example 2, because the addition amount of the metal Al relative to the addition amount of the graphite was too large, the apparent porosity became higher, although the oxidation resistance could be somewhat enhanced.

Examples 3 and 4 show evaluation results when, on the basis of Examples 1 and 2, the mass ratio of the magnesia raw material having the particle diameter of in the range of 0.075 mm or more and 1mm or less to the magnesia raw material having the particle diameter of less than 0.075 mm was adjusted at 5.38, which value is 4.2 or more. As a result, both the apparent porosity and the corrosion resistance could be improved as compared with those of Examples 1 and 2.

Tables 2 and 3 show the study results of the effects of the kind of the added metal and the addition amount thereof, of the addition amount of the graphite, and of the residual carbon rate of the phenol resin. The corrosion resistance index is shown by taking the corrosion amount in Comparative Example 3 shown in Table 3 as 100. Comparative Examples 3 and 4 show the results when the ratios of the metal Al to the addition amount of the graphite were made to 0.9% and 15.4%, respectively. Similarly to Comparative Examples 1 and 2 shown in Table 1, the results that the apparent porosities were high and the corrosion resistances were poor were obtained. In Example 5, the addition amount of the metal Al was made to 1% by mass, and the ratio of the metal Al to the addition amount of the graphite was made to 7.7%; and as a result, further reduction of the apparent porosity and enhancement of the corrosion resistance could be obtained. On the contrary, in Comparative Example 5, even if the metal Al was made to 1%, namely, the ratio of the metal Al to the addition amount of the graphite was made to 7.7%, comparatively coarse metal Al having the size of 0.15 mm or less was added (content of the particles having the particle diameter of 75 µm or less was 10% by mass); and as a result, the sufficient lowering effect in the porosity could not be obtained, giving the poor results in both the oxidation resistance and the corrosion resistance.

In Examples 6, 7, and 8, attempts to lower the porosity were made by concurrently using the metal Si, and in addition, by making the metal Al and the metal Si denser. In Example 9, further improvement in characteristics could be confirmed by adding 0.1% by mass of B₄C to Example 8. Examples 10, 11, 12, and 13 show the MgO-C bricks blended with the graphite with the amounts thereof being 3, 8, 18, and 25% by mass, respectively. In all Examples, the apparent porosities were low, and excellent characteristics were confirmed in both the oxidation resistance and the corrosion resistance. On the contrary, in Comparative Example 6, the MgO-C brick in which the addition amount of the graphite was made to 2% by mass showed higher apparent porosity, which was accompanied with deterioration in both the oxidation resistance and the corrosion resistance. In this case, it is presumed that this was caused by deterioration of the filling property. Likewise, in Comparative Example 7 in which 26% by mass of the addition amount of the graphite was used, it was confirmed that the apparent porosity became higher and also that the corrosion resistance was deteriorated.

In Examples 14, 15, and 16, the MgO-C bricks using, as the binding materials, the phenol resins having the residual carbon rate of 48% and 52% are shown. In all of these Examples, the characteristics are improved as compared with Examples 9 and 11 in which the resin having the residual carbon rate of 42% was used. In Example 17, the addition amount of the pitch was made to 0.9% by mass, which was increased from Example 15; and in this case, the porosity became somewhat higher thereby deteriorating the corrosion resistance, but sufficient improving effects could be obtained. In Examples 18 and 19, the addition amounts of the pitch were made to 0.2% by mass and 0% by mass, respectively, which were decreased from Example 15; it can be confirmed that the porosity was lowered furthermore and that the enhanced effect of the corrosion resistance could be obtained. In Examples 20 and 21, the MgO-C bricks having 4.22 and 11.00, respectively, as the mass ratio of the magnesia raw material having the particle diameter of in the range of 0.075 mm or more and 1 mm or less to the magnesia raw material having the particle diameter of less than 0.075 mm are shown; it can be seen that the porosities thereof were low, and that the excellent characteristics both in the oxidation resistance and the corrosion resistance could be achieved. On the other hand, in Comparative Example 8 in which the mass ratio was made to 3.90, the apparent porosity was much larger and the corrosion resistance was significantly deteriorated, as compared with Example 20. In Comparative Example 9, the magnesia raw material having the particle diameter of in the range of 0.075 mm or more and 1mm or less was blended with the amount of only less than 35% by mass relative to total amount of the magnesia raw material; and by so doing, the blending amount of the particles having the particle diameter of larger than 1 mm became too much, resulting in higher apparent porosity and significantly lower corrosion resistance.

### Examples B

In these Examples, the effects of silicon carbide were investigated. The raw materials were weighed in accordance with the ratios shown in Tables 4 and 5; and the sample was prepared in the same way as Examples A. In addition, the apparent porosity of the obtained sample was measured in the similar manner to those in Examples A; and then, the oxidation resistance and the corrosion resistance were evaluated. However, the evaluation result of the corrosion resistance is shown by the corrosion resistance index by taking the corrosion amount of Comparative Example 31 shown in Table 4 as 100. In this corrosion resistance index, when the value is larger, it means higher corrosion resistance.

**[Table 4]**

| Example No. | | 31 | 32 | 33 | 34 | 35 | 36 | 37 | | |
|---|---|---|---|---|---|---|---|---|---|---|
| Fused magnesia | More than 1 mm | 36 | 36 | 36 | 36 | 36 | 36 | 26 | | |
| | 1 to 0.075 mm | 39 | 39 | 39 | 39 | 39 | 43 | 53 | | |
| | Less than 0.075 mm | 12 | 12 | 12 | 12 | 12 | 8 | 8 | | |
| Magnesia amount; (0.075 mm or more to 1mm or less)/(less than 0.075 mm) less than 0.075 mm) | | 3.25 | 3.25 | 3.25 | 3.25 | 3.25 | 5.38 | 6.63 | | |
| Flake graphite | | 13 | 13 | 13 | 13 | 13 | 13 | 13 | | |
| Metal Al | 0.15 mm or less | | | | | | | | | |
| | 0.075 mm or les | 0.13 | 1 | 1.9 | 1 | 1 | 1 | 1 | | |
| | 0.045 mm or less | | | | | | | | | |
| Ratio of metal Al to addition amount of graphite (%) | | 1.0% | 7.7% | 14.6% | 7.7% | 7.7% | 7.7% | 7.7% | | |
| Metal Si | 0.075 mm or less | | | | | | | | | |
| | 0.045 mm or less | | | | | | | | | |
| Ratio of metal Si to addition amount of graphite (%) | | | | | | | | | | |
| Boron carbide | 0.075 mm or less | | | | | | | | | |
| | 0.045 mm or less | 0.062 | 0.5 | 0.95 | 0.01 | 0.2 | 0.2 | 0.2 | | |
| Ratio of boron carbide to addition amount | of metal Al (%) | 50.0% | 50.0% | 50.0% | 1.0% | 20.0% | 20.0% | 20.0% | | |
| Phenol resin (outer percentage) Phenol resin (outer percentage) | Residual carbon rate: 42% | ○ | ○ | ○ | ○ | ○ | ○ | ○ | | |
| | Residual carbon rate: 48% | | | | | | | | | |
| Apparent porosity (%) | | | | | | | | | | |
| | After firing at 1400C° for 3 hours | 7.7 | 7.2 | 7.4 | 7.6 | 7 | 6.9 | 6.8 | | |
| Oxidation resistance | | | | | | | | | | |
| | Thickness of decarburized layer (mm) | 11.7 | 10.4 | 9.4 | 11.1 | 10.5 | 10.3 | 10.2 | | |
| Corrosion resistance | Index | 142 | 148 | 132 | 140 | 153 | 159 | 168 | | |
| Example No. | | 38 | 39 | 40 | 41 | 42 | 43 | 44 | 45 | 46 |
| Fused magnesia | More than 1 mm | 38 | 34 | 32 | 36 | 36 | 36 | 36 | 36 | 36 |
| | 1 to 0.075 mm | 46 | 41 | 36 | 43 | 43 | 43 | 43 | 43 | 43 |
| | Less than 0.075 mm | 8 | 7 | 7 | 8 | 8 | 8 | 8 | 8 | 8 |
| Magnesia amount; (0.075 mm or more to 1mm or less)/(less than 0.075 mm) | | 5.75 | 5.86 | 5.14 | 5.38 | 5.38 | 5.38 | 5.38 | 5.38 | 5.38 |
| Flake graphite | | 8 | 18 | 25 | 13 | 13 | 13 | 13 | 13 | 13 |
| Metal Al | 0.15 mm or less | | | | | | | | | |
| | 0.075 mm or es | 0.6 | 1.4 | 2 | | 1 | 1 | | | |
| | 0.045 mm or ess | | | | 1 | | | 1 | 1 | 1 |
| Ratio of metal Al to addition amount of graphite (%) | | 7.5% | 7.8% | 8.0% | 7.7% | 7.7% | 7.7% | 7.7% | 7.7% | 7.7% |
| Metal Si | 0.075 mm or ess | | | | | 0.2 | | | | |
| | 0.045 mm or ess | | | | | | 0.2 | 0.4 | 0.6 | 0.6 |
| Ratio of metal Si to addition amount of graphit (%) | | | | | | 1.5% | 1.5% | 3.1% | 4.6% | 4.6% |
| Boron carbide | 0.075 mm or less | | | | | | | | | |
| | 0.045 mm or less | 0.1 | 0.2 | 0.2 | 0.2 | 0.2 | 0.2 | 0.2 | 0.2 | 0.2 |
| Ratio of boron carbide to addition amount of metal Al (%) | | 16.7% | **14.3%** | 10.0% | 20.0% | 20.0% | 20.0% | 20.0% | 20.0% | 20.0% |
| Pitch | Softening temperature: 120°C | | | | | | | | | 1 |
| | **Softening temperature:** 280°C | | | | | | | | 1 | 1 |
| Phenol resin (outer percentage) Phenol resin (outer percentage) | **Residual carbon** rate: **42%** | ○ | ○ | ○ | ○ | ○ | ○ | ○ | | |
| | Residual carbon rate: 48% | | | | | | | | ○ | ○ |
| | | | | | | | | | | |
| Apparent porosity (%) | After firing at 1400C° for 3 hours | | | | | | | | | |
| | | 6.3 | 6.9 | 7.3 | 6.7 | 6.7 | 6.5 | 6.2 | 6.6 | 7 |
| Oxidation resistance | | | | | | | | | | |

| | | | | | | | | | | |
|---|---|---|---|---|---|---|---|---|---|---|
| | Thickness of decarburized laver (mm) | 9.9 | 10.7 | 10.8 | 10 | 10.1 | 9.9 | 9.8 | 10 | 10.5 |
| Corrosion resistance | Index | 161 | 149 | 140 | 163 | 162 | 166 | 165 | 148 | 136 |

**[Table 5]**

| Comparative Example No. | | 31 | 32 | 33 | 34 | 35 | 36 | 37 |
|---|---|---|---|---|---|---|---|---|
| Fused magnesia | More than 1 mm | 36 | 36 | 36 | 36 | 39 | 31 | 36 |
| | 1 to 0.075 mm | 39 | 39 | 39 | 39 | 46 | 36 | 43 |
| | Less than 0.075 mm | 12 | 12 | 12 | 12 | 8 | 7 | 8 |
| Magnesia amount; 0.075 mm or more to 1mm or less)/(less than 0.075 mm) | | 3.25 | 3.25 | 3.25 | 3.25 | 5.75 | 5.14 | 5.38 |
| Flake graphite | | 13 | 13 | 13 | 13 | 7 | 26 | 13 |
| Metal Al | 0.15 mm or less | | | | | | | 1 |
| | 0.075 mm or less | 0.13 | 1.9 | 1 | 0.13 | 0.54 | 2 | |
| | 0.045 mm or less | | | | | | | |
| Ratio of metal Al to addition amount of graphite (%) | | 1.0% | 14.6% | 7.7% | 1.0% | 7.7% | 7.7% | 7.7% |
| Metal Si | 0.075 mm or less | | | | | | | |
| | 0.045 mm or less | | | | | | | |
| Ratio of metal Si to addition amount of graphite (%) | | | | | | | | |
| Boron carbide | 0.075 mm or less | | | | 0.07 | | | |
| | 0.045 mm or less | | | 0.51 | | 0.11 | 0.4 | 0.2 |
| Ratio of boron carbide to addition amount of metal Al (%) | | | | 51.0% | 50.0% | 20.0% | 20.0% | 20.0% |
| Phenol resin (outer percentage) | Residual carbon rate: 42% | ○ | ○ | ○ | ○ | ○ | ○ | ○ |
| Apparent porosity (%) | After firing at 1400C° for 3 hours | | | | | | | |
| | | 7.9 | 7.9 | 9.3 | 7.9 | 7.9 | 8.5 | 8.0 |
| Oxidation resistance | Thickness of decarburized layer (mm) | | | | | | | |
| | | 11.9 | 10.3 | 12.6 | 11.8 | 11.8 | 10.9 | 11.2 |
| Corrosion resistance | Index | 100 | 121 | 95 | 101 | 137 | 96 | 101 |

Examples 31 to 33 and Comparative Examples 31 to 33 show the results of the investigation with regard to the combined effects of boron carbide in the MgO-C brick in which the addition amount of the graphite was made to 13% by mass (this amount refers to the ratio to total amount of the magnesia raw material and the graphite- the same is applied hereunder) while the addition amount of the metal Al was changed. Example 31 is the case when 0.13% by mass of the metal Al having the particle diameter of 75 µm or less and 0.065% by mass of boron carbide having the particle diameter of 45 µm or less were added; here, the apparent porosity of 7.7% could be achieved thereby giving excellent results in both the oxidation resistance and the corrosion resistance. On the contrary, in Comparative Example 31, because boron carbide was not added, the apparent porosity became higher thereby giving poor results in both the oxidation resistance and the corrosion resistance.

In Examples 32 and 33, the addition amounts of the metal Al were made to 1.0% by mass and 1.9% by mass, respectively, and the addition amounts of boron carbide were made to 0.5% by mass and 0.95% by mass, respectively; in these cases the apparent porosities were lowered furthermore as compared with Example 31 thereby leading to excellent results in the oxidation resistance. On the contrary, in Comparative Example 32, boron carbide was not added, thereby leading to the result of higher apparent porosity as compared with Example 33. In Comparative Example 33, because the addition amount of boron carbide relative to the addition amount of the metal Al was too much, the apparent porosity became higher, and thus, the corrosion resistance was deteriorated lower.

Example 34 is the case when the addition amount of boron carbide relative to the addition amount of the metal Al was made to 1.0% by mass; here, the apparent porosity of 7.6% could be achieved. Example 35 is the case when the addition amount of boron carbide relative to the addition amount of the metal Al was made to 20% by mass; here, the apparent porosity was further lowered thereby leading to the results that both the oxidation resistance and the corrosion resistance were enhanced.

In Comparative Example 34, the addition amount of boron carbide relative to the addition amount of the metal Al was appropriate; however, because boron carbide was added as comparatively coarse particles having the particle diameter of 75 µm or less (content of the particles having the particle diameter of 45 µm or less was 15% by mass), the apparent porosity became higher.

Examples 36 and 37 show the evaluation results of the cases wherein the mass ratios of the magnesia raw material having the particle diameter of in the range of 0.075 mm or more and 1mm or less to the magnesia raw material having the particle diameter of less than 0.075 mm were adjusted at 5.38 and 6.63, respectively; and as a result, the apparent porosities were further lowered and both the oxidation resistance and the corrosion resistance were enhanced.

In Examples 38, 39, and 40, the MgO-C bricks in which the addition amounts of the graphite were made to 8, 18, and 25% by mass, respectively, were studied. All of them showed low apparent porosities, and excellent oxidation resistances and corrosion resistances. On the contrary, in Comparative Example 35, the MgO-C brick in which the addition amount of the graphite was made to 7% by mass was studied; here, the apparent porosity became higher, which was accompanied by deterioration in the oxidation resistance. In Comparative Example 6 in which the addition amount of the graphite was made to 26% by mass, it was also confirmed that the apparent porosity became higher and that the corrosion resistance was deteriorated.

In Example 41, by making the metal Al particles denser, further lower porosity could be achieved. On the contrary, in Comparative Example 37, 1.0% by mass of the comparatively coarse metal Al particles having the particle diameter of 0.15 mm or less was added (content of the particles having the particle diameter of 75 µm or less was 10% by mass); and as a result, sufficient lowering effect of the porosity could not be obtained, thereby leading to the results of poorer oxidation resistance and corrosion resistance as compared with Examples 36 and 41.

In Example 42, the metal Si having the particle diameter of 75 µm or less was concurrently used. It was confirmed that by concurrently using the metal Si, the porosity became lower. In Example 43, the metal Si having the particle diameter of 45 µm or less was used, so that further lowered porosity could be achieved.

Example 44 is the case when the metal Al pulverized to the particle diameter of 45 µm or less was concurrently used with the metal Si pulverized to the particle diameter of 45 µm or less; here, further lowered porosity could be achieved by concurrently using the pulverized metals.

In Example 45, the MgO-C brick using the phenol resin having the residual carbon rate of 30% was studied, and in Example 46, the addition amount of the pitch-based raw material was made to 2% by mass. Both Examples were within the scope of the present invention, so that dense structures could be obtained.

## Claims

1. A magnesia carbon brick, comprising a magnesia raw material and a graphite, wherein the magnesia carbon brick contains the graphite with an amount in the range of 3% or more by mass to 25% or less by mass and the magnesia raw material with an amount in the range of 75% or more by mass to 97% or less by mass, the both amounts being relative to a total amount of the magnesia raw material and the graphite, and a metal Al containing 85% or more by mass of particles having particle diameter of 75 µm or less with an amount thereof being in the range of 1% or more by mass and 15% or less by mass relative to addition amount of the graphite, wherein the magnesia carbon brick comprises pitch-based raw material in an amount which is less than 1% by mass relative to the total amount of the magnesia raw material and the graphite, the magnesia carbon brick being obtained from magnesia raw material in which an amount of particles having a particle diameter in the range of 0.075 mm or more to 1 mm or less is 35% or more by mass relative to the total amount of the magnesia raw material and the graphite; the mass ratio of the magnesia raw material having the particle diameter of in the range of 0.075 mm or more and 1 mm or less to the magnesia raw material having the particle diameter of less than 0.075 mm is 4.2 or more; and an apparent porosity of the magnesia carbon brick after reductive firing for 3 hours at 1400°C is 7.8% or less.

2. The magnesia carbon brick according to claim 1, wherein the magnesia carbon brick contains the metal Al containing 85% or more by mass of particles having particle diameter of 45 µm or less with amount thereof being in the range of 3% or more by mass and 15% or less by mass relative to addition amount of the graphite.

3. The magnesia carbon brick according to claim 1, wherein the magnesia carbon brick contains the metal Al containing 85% or more by mass of particles having particle diameter of 45 µm or less with amount thereof being in the range of 3% or more by mass and 10% or less by mass relative to addition amount of the graphite.

4. The magnesia carbon brick according to any one of claims 1 to 3, wherein the magnesia carbon brick contains boron carbide containing 85% or more by mass of particles having particle diameter of 45 µm or less with amount thereof being in the range of 1% or more by mass and 50% or less by mass relative to addition amount of the metal Al.

5. The magnesia carbon brick according to any one of claims 1 to 4, wherein the magnesia carbon brick contains metal Si containing 85% or more by mass of particles having particle diameter of 75 µm or less with amount thereof being 5% or less by mass relative to addition amount of the graphite.

6. The magnesia carbon brick according to any one of claims 1 to 5, wherein a phenol resin having 48% or more of residual carbon rate is used as a binding material.

## Patentansprüche

1. Magnesiumoxid-Kohlenstoff-Stein, aufweisend ein Magnesiumoxid-Rohmaterial und einen Graphit, wobei der Magnesiumoxid-Kohlenstoff-Stein den Graphit in einer Menge im Bereich von 3 Masse-% oder mehr bis 25 Masse-% oder weniger und das Magnesiumoxid-Rohmaterial in einer Menge im Bereich von 75 Masse-% oder mehr bis 97 Masse-% oder weniger enthält, wobei die beiden Mengen auf die Gesamtmenge des Magnesiumoxid-Rohmaterials und des Graphits bezogen sind, und ein Metall Al, das 85 Masse-% oder mehr Teilchen mit einem Teilchendurchmesser von 75 µm oder weniger enthält, wobei eine Menge davon im Bereich von 1 Masse-% oder mehr und 15 Masse-% oder weniger, relativ zur Zugabemenge des Graphits, liegt, wobei der Magnesiumoxid-Kohlenstoff-Stein ein Rohmaterial auf Pechbasis in einer Menge enthält, die weniger als 1 Masse-%, relativ zur Gesamtmenge des Magnesiumoxid-Rohmaterials und des Graphits, beträgt, wobei der Magnesiumoxid-Kohlenstoff-Stein aus Magnesiumoxid-Rohmaterial erhalten wird, in dem eine Menge von Teilchen mit einem Teilchendurchmesser im Bereich von 0,075 mm oder mehr bis 1 mm oder weniger 35 Masse-% oder mehr, bezogen auf die Gesamtmenge des Magnesiumoxid-Rohmaterials und des Graphits, beträgt; das Massenverhältnis des Magnesiumoxid-Rohmaterials mit einem Teilchendurchmesser im Bereich von 0,075 mm oder mehr und 1 mm oder weniger zu dem Magnesiumoxid-Rohmaterial mit einem Teilchendurchmesser von weniger als 0,075 mm 4,2 oder mehr beträgt; und eine scheinbare Porosität des Magnesiumoxid-Kohlenstoff-Steins nach reduktivem Brennen für 3 Stunden bei 1400 °C 7,8 % oder weniger beträgt.

2. Magnesiumoxid-Kohlenstoff-Stein nach Anspruch 1, wobei der Magnesiumoxid-Kohlenstoff-Stein das Metall Al enthält, das 85 Masse-% oder mehr an Teilchen mit einem Teilchendurchmesser von 45 µm oder weniger enthält, wobei die Menge davon im Bereich von 3 Masse-% oder mehr und 15 Masse-% oder weniger, bezogen auf die Zugabemenge des Graphits, liegt.

3. Magnesiumoxid-Kohlenstoff-Stein nach Anspruch 1, wobei der Magnesiumoxid-Kohlenstoff-Stein das Metall Al enthält, das 85 Masse-% oder mehr an Teilchen mit einem Teilchendurchmesser von 45 µm oder weniger enthält, wobei die Menge davon im Bereich von 3 Masse-% oder mehr und 10 Masse-% oder weniger, bezogen auf die Zugabemenge des Graphits, liegt.

4. Magnesiumoxid-Kohlenstoff-Stein nach einem der Ansprüche 1 bis 3, wobei der Magnesiumoxid-Kohlenstoff-Stein Borkarbid enthält, das 85 Masse-% oder mehr an Teilchen mit einem Teilchendurchmesser von 45 µm oder weniger enthält, wobei die Menge davon im Bereich von 1 Masse-% oder mehr und 50 Masse-% oder weniger, bezogen auf die Zugabemenge des Metalls Al, liegt.

5. Magnesiumoxid-Kohlenstoff-Stein nach einem der Ansprüche 1 bis 4, wobei der Magnesiumoxid-Kohlenstoff-Stein das Metall Si enthält, das 85 Masse-% oder mehr an Teilchen mit einem Teilchendurchmesser von 75 µm oder weniger enthält, wobei die Menge davon 5 Masse-% oder weniger, bezogen auf die Zugabemenge des Graphits, beträgt.

6. Magnesiumoxid-Kohlenstoff-Stein nach einem der Ansprüche 1 bis 5, wobei ein Phenolharz mit einem Restkohlenstoffgehalt von 48% oder mehr als Bindematerial verwendet wird.

## Revendications

1. Brique de carbone à base de magnésie, comprenant une matière brute à base de magnésie et un graphite, dans laquelle la brique de carbone à base de magnésie contient le graphite en une quantité dans la plage de 3 % ou plus en poids à 25 % ou moins en poids et la matière première à base de magnésie en une quantité dans la plage de 75 % ou plus en poids à 97 % ou moins en poids, les deux quantités se rapportant à une quantité totale de la matière première à base de magnésie et du graphite, et un métal Al contenant 85 % ou plus en poids de particules présentant un diamètre de particule de 75 µm ou moins, une quantité de celui-ci se situant dans la plage de 1 % ou plus en poids et de 15 % ou moins en poids par rapport à la quantité d'ajout du graphite, dans laquelle la brique en carbone à base de magnésie comprend une matière brute à base de brai en une quantité qui est inférieure à 1 % en poids par rapport à la quantité totale de la matière brute à base de magnésie et du graphite, la brique en carbone à base de magnésie étant obtenue à partir de la matière brute à base de magnésie dans laquelle une quantité de particules présentant un diamètre de particule dans la plage de 0,075 mm ou plus à 1 mm ou moins est de 35 % ou plus en poids par rapport à la quantité totale de la matière brute à base de magnésie et du graphite ; le rapport massique de la matière brute à base de magnésie présentant le diamètre de particule dans la plage de 0,075 mm ou plus et 1 mm ou moins par rapport à la matière brute à base de magnésie présentant le diamètre de particule inférieur à 0,075 mm est de 4,2 ou plus ; et une porosité apparente de la brique en carbone à base de magnésie après cuisson de réduction pendant 3 heures à 1400°C est de 7,8 % ou moins.

2. Brique en carbone à base de magnésie selon la revendication 1, dans laquelle la brique en carbone à base de magnésie contient le métal Al contenant 85 % ou plus en poids de particules présentant un diamètre de particule de 45 µm ou moins, la quantité de celui-ci se situant dans la plage de 3 % ou plus en poids et 15 % ou moins en poids par rapport à la quantité d'ajout du graphite.

3. Brique en carbone à base de magnésie selon la revendication 1, dans laquelle la brique en carbone à base de magnésie contient le métal Al contenant 85 % ou plus en poids de particules présentant un diamètre de particule de 45 µm ou moins, la quantité de celui-ci se situant dans la plage de 3 % ou plus en poids et de 10 % ou moins en poids par rapport à la quantité d'ajout du graphite.

4. Brique en carbone à base de magnésie selon l'une quelconque des revendications 1 à 3, dans laquelle la brique en carbone à base de magnésie contient du carbure de bore contenant 85 % ou plus en poids de particules présentant un diamètre de particule de 45 µm ou moins, une quantité de celui-ci se situant dans la plage de 1 % ou plus en poids et de 50 % ou moins en poids par rapport à la quantité d'ajout du métal Al.

5. Brique de carbone à base de magnésie selon l'une quelconque des revendications 1 à 4, dans laquelle la brique de carbone à base de magnésie contient du métal Si contenant 85 % ou plus en poids de particules présentant un diamètre de particule de 75 µm ou moins, une quantité de celui-ci étant de 5 % ou moins en poids par rapport à la quantité d'ajout du graphite.

6. Brique en carbone à base de magnésie selon l'une quelconque des revendications 1 à 5, dans laquelle une résine phénolique présentant 48 % ou plus de taux de carbone résiduel est utilisée en tant qu'un matériau liant.
